# EUROPÄISCHE PATENTSCHRIFT

(11) **EP 0 492 406 B1**
(45) Veröffentlichungstag und Bekanntmachung des Hinweises auf die Patenterteilung: **10.05.1995**
(21) Anmeldenummer: 91121715.6
(22) Anmeldetag: 18.12.1991
(51) Int. Cl.: A21D 8/04

(54) **Backmittel oder Backmehl, sowie Verfahren zur Herstellung von Backteigen und Backwaren**
Baking agent or flour, and method of production of dough and bakery products
Agent d'amélioration pour la cuisson ou farine, et méthode de production des pâtes et des produits de cuisson

(30) Priorität: 22.12.1990 DE 4041533
(43) Veröffentlichungstag der Anmeldung: 01.07.1992
(73) Patentinhaber: Röhm GmbH, 64293 Darmstadt (DE)
(72) Erfinder: Gottmann, Klaus, Dr., W-6148 Heppenheim (DE); Sprössler, Bruno, Dr., W-6101 Rossdorf 1 (DE)

(56) Entgegenhaltungen:
- EP-A- 0 246 554
- EP-A- 0 310 460
- PATENT ABSTRACTS OF JAPAN vol. 15, no. 56 (C-804)(4584) 8. Februar 1991

## Beschreibung

Die Erfindung betrifft eine Verbesserung auf dem Gebiet der Backtechnolgie von Hefeteigen, die in neuen Backmitteln, verbesserten Backmehlen sowie in verbesserten Verfahren zur Herstellung von Hefeteigen und Hefebackwaren zur Anwendung kommt.

In der Backtechnologie, insbesonders bei der Herstellung von Hefebackwaren aus schwachen Weizenmehlen, tritt häufig eine unbefriedigende Stabilität des Teiges auf, was dazu führt, daß der Teig einen zu geringen Dehnwiderstand hat und das bei der Teigfermentation entstehende Kohlendioxidgas nicht zu halten vermag. Es entstehen Brote mit geringer Lockerung und niedrigem Volumen. Diese Erscheinung wird auf Mängel der Proteinbestandteile des Mehles, der sog. Kleber, zurückgeführt. Es ist bekannt und war z.B. in den USA allgemein gebräuchlich, dem Mehl zur Verbesserung der Dehnwiderstandes Kaliumbromat zuzusetzen; vgl. Y. Pomeranz, "Wheat Chemistry and Technology" (Seite 700; herausgegeben 1971 von der Association of Cereal Chemists, St. Paul, Minnesota, USA)

Aus dem Bestreben, den Zusatz von Chemikalien zu Lebensmitteln zu verringern und stattdessen natürliche Hilfsstoffe einzusetzen, entstand die Aufgabe, den Dehnwiderstand von Hefeteigen ohne Einsatz von anorganischen Chemikalien zu verbessern.

Es wurde nun gefunden, daß Transglutaminase den Dehnwiderstand von Hefeteigen, insbesondere aus Weizenmehl, in vergleichbarer Weise verbessert wie Kaliumbromat. Der Einsatz der Transglutaminase ist vom toxikologischen und lebensmittelrechtlichen Standpunkt unbedenklich, da es sich um einen natürlichen, verdaubaren Eiweißkörper handelt.

Aus der JP-A 2/286031 war es schon bekannt, bei der Herstellung von Keksgebäck auf Basis von Weizenmehl, Zucker, Ei und Wasser zur Verbesserung der Teigbeschaffenheit und zur Vergrößerung des Backvolumens eine Transglutaminase zuzusetzen. Daraus konnten keine Rückschlüsse auf die Herstellung von Hefebackwaren aus Weizenmehl abgeleitet werden. Auch die EP-A 310 460, wonach bei der Herstellung von Hefeteigen gekapselte Backhilfsmittel mit einem Gehalt von beispielsweise alpha-Amylase und Ascorbinsäure eingesetzt werden, konnte die Erfindung nicht nahelegen.

Transglutaminase ist ein aus verschiedenen Quellen zugängliches Enzym, das im Tier- und Pflanzenreich weit verbreitet ist. Sie kann aus der Leber von Meerschweinchen gewonnen werden; vgl. J.E. Folk u. P.W. Cole, Journal of Biological Chemistry, Vol.241 (1966) S.5518 ff. Für technische Zwecke kommt die Gewinnung aus Kulturen von Mikroorganismen in Betracht, z.B. aus Schimmelpilzkulturen; vgl. Tomita et.al., Agric. Biol. Chemistry, Vol.52(2), 1988, S. 1159-1163. Eine Methode zur Einführung des Transglutaminase-Gens in das Genom eines Mikroorganismus ist von K. Ikura (Europ. Journal of Biochemistry, Vol.187, 1990, S.705-711) beschrieben worden. In dieser Weise transformierte Mikroorganismen können zur technischen Erzeugung von Transglutaminase eingesetzt werden.

Es ist bekannt, daß Transglutaminase auf Proteine vernetzend wirkt. Vermutlich hängt die erfindungsgemäße Einwirkung auf die rheologischen Teigeigenschaften mit dieser Fähigkeit zusammen. Jedoch ist der Einsatz der Transglutaminase zur Verbesserung von Hefeteigen noch nicht in Betracht gezogen worden. Bekannt ist die Zugabe von Transglutaminsasen zu Weizenmehlen für die Herstellung von Kuchen, wobei keine Hefe eingesetzt wird. Damit soll das Volumen erhöht und die innere und äußere Beschaffenheit des Gebäcks verbessert werden. (JP-A 2-286031, Patent Abstracts of Japan, 15, Nr.56)

Schließlich ist auch die Verbesserung technologischer Eigenschaften von Eiweißfuttermitteln mittels Transglutaminase von G. Matheis und J.R. Whitaker in Journal of Food Biochemistry, Vol.11 (1987), Seiten 309 bis 327 (312) vorgeschlagen worden.

Die Aktivität eines Transglutaminase-Präparats kann nach J.E. Folk und P.W. Cole (Biochem. Biophys. Acta, Vol.122, S.244, 1966) durch den colorimetrischen Hydroxamat-Test mit Benzoxy-carbonyl-glutaminyl-glycin-hydroxylamin als Substrat bei pH 6, 37°C bestimmt werden. Die colorimetrische Bestimmung wird bei einer Lichtwellenlänge von 525 nm ausgeführt. Eine Enzym-Einheit ist die Menge Transglutaminase, die unter Standardbedingungen 0,5 Mikromol Hydroxomat pro Minute freisetzt. Für die Erfindung eignen sich besonders Transglutaminase-Präparate mit einer Aktivität von wenigstens 100 Einheiten pro Gramm, vorzugsweise 1000 bis 10.000 Einheiten pro Gramm.

Der Bedarf an Transglutaminase zur Verbesserung der Dehnungseigenschaften richtet sich im Einzelfall nach der Beschaffenheit des Mehles. Er liegt in der Regel im Bereich von 100 bis 10.000, vorzugsweise 500 bis 2000 Einheiten je Kilogramm Mehl. Bezogen auf den Proteingehalt des Mehles ist ein Einsatz von 5 000 - 20 000 Einheiten pro Kilogramm Protein sinnvoll. Wird die Transglutaminase als Bestandteil eines Backmittels zugesetzt, so liegt sie darin vorzugsweise in einer Menge von 10.000 bis 1 Mio Einheiten je Kilogramm des Backmittels vor.

Bei der Herstellung von Hefebackwaren kann die Transglutaminase auf verschiedene Weise eingesetzt werden. Das technische Enzympräparat kann als solches zusammen mit den übrigen Bestandteilen zur Teigbereitung angewendet werden. Es kann jedoch auch in der Mühle mit dem Mehl vermischt werden, was den Vorteil hat, daß die Dosierung den Mehleigenschaften, d.h. seinem natürlichen Klebereigenschaften angepaßt werden kann, so daß dem Bäcker ein Mehl von stets gleichbleibenden Backeigenschaften zur Verfügung gestellt werden kann. Die Transglutaminase wird daher vorzugsweise schwachen Weizenmehlen zugesetzt, um die Klebereigenschaften zu stärken.

Die Transglutaminase kann auch mit anderen üblichen Zusatzstoffen zu einem Backmittel für Hefebackwaren vermischt werden, welches der Bäcker zusammen mit Mehl, Wasser und Hefe zur Teigherstellung einsetzt. Als Bestandteile von Backmitteln kommen neben der Transglutaminase auch andere Backenzyme, wie Amylasen, Proteasen und Hemicellulasen, sowie Ascorbinsäure, Backemulgatoren, Salz, Zucker oder Mehl in Betracht. Als Backmittel im Sinne der Erfindung werden daher Mischungen aus wenigstens einem der genannten Bestandteile mit Transglutaminase angesehen, wobei die Konzentration dieses Enzyms in einem Bereich liegt, der höher als der im Teig erforderliche Gehalt liegt.

Die in den Backmitteln enthaltenen Backemulgatoren bilden keine scharf abgegrenzte Stoffgruppe. Man versteht darunter Stoffe, die die Homogenität des Teiges fördern, indem sie auf die Teigbestandteile benetzend wirken und ihre Verträglichkeit verbessern. Das Emulgatormolekül ist aus einem unpolaren, lipophilen, hydrophoben Anteil und einem polaren, hydrophilen oder lipophoben Anteil zusammengesetzt. Eine umfassende Übersicht über Emulgatoren als Zusatzstoffe für Lebensmittel geben Gregor Schuster und Wolfgang Adams in einer 1979 - 1985 erschienenen Artikelserie in der "Zeitschrift für Lebensmittel-Technologie und Verfahrenstechnik." In der Praxis sind vor allem die Ester der Speisefettsäure-mono- und -diglyceride mit Diacetylweinsäure sowie Lecithine und Lysolecithine von herausragender Bedeutung.

Die Wirkung der Transglutaminase auf den Hefeteig kann am Extensogramm verfolgt werden. Neben der erwünschten Erhöhung des Dehnwiderstandes beobachtet man gelegentlich eine Verminderung der Dehnbarkeit, was dazu führt, daß der Teigstrang bei der Dehnungsprüfung früher reißt. Es wurde gefunden, daß sich diese unerwünschte Begleitwirkung durch die Kombination der Transglutaminase mit Proteasen ausschließen läßt. Darüberhinaus wird durch die Mitverwendung der Protease das Backvolumen erhöht und die Krumenbeschaffenheit verbessert.

Als Proteasen können z.B. Papain oder Bakterienproteasen verwendet werden. Bevorzugt sind neutrale Pilzproteasen, insbesondere aus Schimmelpilzkuluren, wie Asp. niger oder Asp. oryzae; sie lassen eine hohe Dosierungstoleranz zu. Das Verhältnis von Proteasen zur Transglutaminase wird am besten empirisch mittels des Extensographen anhand der Einwirkung auf die Teigdehnbarkeit festgelegt.

Die Wirkung der Transglutaminase wird durch Ascorbinsäure gesteigert. Durch ein abgestimmtes Verhältnis von Transglutaminase zu Ascorbinsäure läßt sich der Zeitpunkt festlegen, an dem die niedrige, für das Kneten günstige Teigviskosität in eine höhere Viskosität, die für die Krumenbeschaffenheit vorteilhaft ist, übergeht.

Die im Sinne der Erfindung unter Einsatz von Transglutaminase hergestellten Hefeteige lassen sich unter üblichen Bedingungen zu hochwertigen Hefebackwaren verarbeiten. Dazu gehören z.B. Weißbrot, Brötchen und Weizenmischbrot.

Die Wirksamkeit des erfindungsgemäßen Einsatzes von Transglutaminase wird an den nachfolgenden Untersuchungen und Backversuchen dargelegt.

Im Farinographen werden Hefeteige mit und ohne Enzymzusatz erzeugt. Dabei wird die zur Teigherstellung erforderliche Wassermenge bestimmt. Nach einer Ruhezeit von 135 min bei 30°C werden der Dehnwiderstand und die Dehnbarkeit der Teige gemessen. Wenn auch die Steigerung des Dehnwiderstandes das wichtigste Ziel der Erfindung ist, darf die Dehnbarkeit nicht gleichzeitig unangemessen absinken. Für das Verhältnis von Dehnwiderstand zu Dehnbarkeit liegt das Optimum im Bereich von 2,5 bis 3,0. Weiterhin wird eine hohe Belastbarkeit des Teiges angestrebt, die sich durch den am Extensogramm ermittelten Energiewert zu erkennen gibt. Der Energiewert ergibt sich aus der Fläche unter der Extensogramm-Kurve.

Die Extensogramme wurden nach der standartisierten AACC-Methode 54-10 der American Association of Cereal Chemists, Inc., St. Paul, Minnesota, USA, erstellt. Die Ergebnisse sind in Tabelle 1 angegeben:

### Backversuche

Ansätze von je 1000 g Weizenmehl Typ 550, 590 ml Wasser, 50 g Hefe, 15 g Salz, 10 g Zucker und 10 g Erdnußfett wurden im Universal-Schnellkneter (A. Stephan & Söhne, Hameln) mit den in Tabelle 2 angegebenen Backzusätzen jeweils 1 Minute auf Schaltstufe 1 (1400 rpm) bei 26-27°C angeknetet. Der Teig wurde bei 32°C und 80 % rel. Luftfeuchtigkeit 20 min im Gärschrank gehalten, danach rundgewirkt und 10 min bei 20-22°C gehalten. Anschließend wurde der Teig in 30 Teigstücke geteilt, die nach einer kurzen Zwischengare (3 min auf dem Wirkteller) 25 min auf Stückgäre bei 32°C im Gärschrank gehalten wurden. Eine weitere Stückgäre bei 20-22°C und bewegter Luft schloß sich an. Danach wurden die Stücke in den auf 250°C vorgeheizten Etagenbackofen eingeschossen. Nach kräftiger Schwadengabe wurde etwa 20 min ausgebacken. Die Resultate sind in Tabelle 2 angegeben.

**Tabelle 1**

| Teigeigenschaft | ohne Enzymzusatz | mit 2000 U/kg Mehl Transglutaminase | mit 2000 U/kg Mehl Transglutaminase + 0,3 g/kg Mehl Pilzprotease* |
|---|---|---|---|
| Wasseraufnahme % | 54,1 | 54,2 | 54,1 |
| Dehnwiderstand Dw (EE) | 230 | 510 | 400 |
| Dehnbarkeit Db (mm) | 182 | 120 | 170 |
| Verhältniszahl Dw/Db | 1,3 | 4,25 | 2,35 |
| Energie (qcm) | 80 | 75 | 122 |

| | | | |
|---|---|---|---|
| *) Pilzprotease (Handelsprodukt Veron PS ^{R}, Röhm GmbH) | | | |

**Tabelle 2**

| Backergebnisse | | | | |
|---|---|---|---|---|
| Versuch-Nr. | Backzusätze je kg Mehl | Teigbeschaffenht. | Backvolumen ml/10 Brötchen | Krumen-Porung |
| 0 | ohne | weich | 1850 | offen |
| I | 500 U Transglut. | wollig,fest | 2000 | fein |
| II | 2000 U Transglut. | fest, kurz | 1750 | dicht,fest |
| III | 2000 U Transglut. + 0,3 g Protease* | wollig | 2200 | fein |
| IV | 500 U Transglut. + 0,02 g Ascorbins. | wollig,fest | 2100 | fein |
| V | 1000 U Transglut. + 0,1 g Amylase ** + 0,2 g Hemicellulase*** | wollig,fest | 2300 | fein |

| | | | | |
|---|---|---|---|---|
| *) Pilzprotease (Handelsprodukt Veron PS ^{R}, Röhm GmbH) | | | | |
| **) Pilzamylase (Veron AC^{R}, Röhm GmbH) | | | | |
| ***) Pilzhemicellulase (Veron HE^{R}, Röhm GmbH | | | | |

## Patentansprüche

1. Verfahren zur Herstellung eines Hefeteiges aus Weizenmehl, Wasser, Hefe, üblichen Backmitteln und einem oder mehreren Backenzymen,
dadurch gekennzeichnet,
daß als Backenzym eine Transglutaminase eingesetzt wird.

2. Verfahren zur Herstellung von Hefebackwaren aus Weizenmehl, Wasser, Hefe, üblichen Backmitteln und einem oder mehreren Backenzymen,
dadurch gekennzeichnet,
daß als Backenzym eine Transglutaminase eingesetzt wird.

3. Verfahren nach Anspruch 1 oder 2, dadurch gekennzeichnet, daß zusätzlich eine Protease mitverwendet wird.

4. Verfahren nach einem oder mehreren der Ansprüche 1 bis 3, dadurch gekennzeichnet, daß zusätzlich Ascorbinsäure mitverwendet wird.

5. Backmittel für Hefebackwaren, enthaltend ein oder mehrere Backenzyme und Backemulgatoren,
dadurch gekennzeichnet,
daß es als Backenzym eine Transglutaminase enthält.

6. Backmittel nach Anspruch 5, dadurch gekennzeichnet, daß es als Backenzyme eine Transglutaminase und eine Protease enthält.

7. Backmittel nach Anspruch 5 oder 6, dadurch gekennzeichnet, daß es 10.000 bis 1 Million Einheiten der Transglutaminase je Kilogramm des Backmittels enthält.

8. Backmittel nach einem oder mehreren der Ansprüche 5 bis 7, gekennzeichnet durch einen Gehalt an Ascorbinsäure.

9. Weizen-Backmehl für Hefebackwaren mit einem Ausmahlungsgrad entsprechend Type 550, gekennzeichnet durch einen Gehalt an einer Transglutaminase.

10. Weizen-Backmehl für Hefebackwaren, gekennzeichnet durch einen Gehalt an Transglutaminasen und Proteasen.

11. Weizen-Backmehl für Hefebackwaren, gekennzeichnet durch einen Gehalt an Transglutaminasen und Ascorbinsäure.

12. Weizen-Backmehl nach einem oder mehreren der Ansprüche 9 bis 12, dadurch gekennzeichnet, daß es 100 bis 10.000 Einheiten der Transglutaminase je Kilogramm des Backmehls enthält.

13. Verfahren nach Anspruch 1 oder 2, dadurch gekennzeichnet, daß je Kilogramm Weizenmehl 100 bis 10.000 Einheiten der Transglutaminase eingesetzt werden.

## Claims

1. A process for preparing a leavened dough from wheat flour, water, yeast, the usual baking ingredients and one or more baking enzymes, characterised in that a transglutaminase is used as baking enzyme.

2. A process for preparing yeast bakery products from wheat flour, water, yeast, the usual baking ingredients and one or more baking enzymes, characterised in that a transglutaminase is used as baking enzyme.

3. A process according to claim 1 or 2, characterised in that, additionally, a protease is also used.

4. A process according to one or more of claims 1 to 3, characterised in that, additionally, ascorbic acid is also used.

5. Baking ingredient for yeast bakery products containing one or more baking enzymes and baking emulsifiers, characterised in that it contains a transglutaminase as baking enzyme.

6. Baking ingredient according to claim 5, characterised in that it contains a transglutaminase and a protease as baking enzymes.

7. Baking ingredient according to claim 5 or 6, characterised in that it contains 10,000 to 1 million units of transglutaminase per kilogram of the baking ingredient.

8. Baking ingredient according to one or more of claims 5 to 7, characterised by an ascorbic acid content.

9. Wheat flour for yeast bakery products with a milling degree according to Type 550, characterised by a transglutaminase content.

10. Baking flour for yeast bakery products, characterised by a transglutaminase and protease content.

11. Wheat flour for yeast bakery products, characterised by a transglutaminase and ascorbic acid content.

12. Wheat flour according to one or more of claims 9 to 12, characterised in that it contains 100 to 10,000 units of transglutaminase per kilogram of baking flour.

13. A process according to claim 1 or 2, characterised in that 100 to 10,000 units of transglutaminase are used per kilogram of wheat flour.

## Revendications

1. Procédé de préparation d'une pâte à lever à partir de farine de blé, d'eau, de levain, d'ingrédients de boulangerie usuels et d'une au de plusieurs enzymes de boulangerie. caractérisé en ce qu'une transglutaminase est utilisée comme enzyme de boulangerie.

2. Procédé de fabrication de produits levés de boulangerie et de pâtisserie à partir de farine de blé, d'eau, de levain, d'ingredients de boulangerie usuels et d'une au de plusieurs enzymes de boulangerie, caractérisé en ce qu'une transglutaminase est utilisée comme enzyme de boulangerie.

3. Procéde selon la revendication 1 ou 2. caractérisé en ce qu'en plus, une protéase est utilisée simultanément.

4. Procédé selon l'une quelconque des revendications 1 à 3, caractérisé en ce qu'en plus, de l'acide ascorbique est utilisé simultanément.

5. Ingrédient de boulangerie pour produits levés de boulangerie et de pâtisserie, contenant un ou plusieurs émulsifiants de boulangerie et enzymes de boulangerie, caractérisé en ce qu'il contient une transglutaminase comme enzyme de boulangerie.

6. Ingrédient de boulangerie selon la revendication 5, caractérisé en ce qu'il contient une transglutaminase et une protéase comme enzymes de boulangerie.

7. Ingrédient de boulangerie selon la revendication 5 ou 6, caractérisé en ce qu'il contient de 10 000 à 1 000 000 unités de transglutaminase par kilogramme de l'ingrédient de boulangerie.

8. Ingrédient de boulangerie selon l'une quelconque des revendications 5 à 7, caractérisé par une teneur en acide ascorbique.

9. Farine de blé de boulangerie pour produits levés de boulangerie et de pâtisserie, ayant un taux de blutage correspondant au type 550, caractérisée par une teneur en transglutaminase.

10. Farine de blé de boulangerie pour produits levés de boulangerie et de pâtisserie, caractérisée par une teneur en transglutaminases et en protéases.

11. Farine de blé de boulangerie pour produits levés de boulangerie et de pâtisserie, caractérisée par une teneur en transglutaminases et en acide ascorbique.

12. Farine de blé de boulangerie selon l'une quelconque des revendications 9 à 12, caractérisée en ce qu'elle contient de 100 à 10 000 unités de transglutaminase par kilogramme de la farine de boulangerie.

13. Procédé selon la revendication 1 ou 2, caractérisé en ce que 100 a 10 000 unités de transglutaminase sont utilisées par kilogramme de farine de blé.
